# DEMANDE DE BREVET EUROPEEN

(11) **EP 0 712 611 A1**
(43) Date de publication de la demande: **22.05.1996**
(21) Numéro de dépôt: 95470031.6
(22) Date de dépôt: 15.09.1995
(51) Int. Cl.: A61C 1/08, A61B 1/24

(54) **Nouveau contre-angle ou pièce à main de dentisterie équipé d'une fibre optique**

(30) Priorité: 03.11.1994 FR 9413417
(71) Demandeur: MICRO MEGA INTERNATIONAL MANUFACTURES (Société Anonyme), F-25000 Besancon (FR)
(72) Inventeur: Badoz, Jean-Marie, Doubs, F-25300 Pontarlier (FR); Jacoulet, Jean-Paul, F-25000 Besancon (FR)
(74) Mandataire: Poupon, Michel

(57) **Abrégé**

La présente invention concerne un nouveau contre-angle ou pièce à main de dentisterie équipé d'une fibre optique permettant de fournir sur la tête dudit contre-angle ou de ladite pièce à main un faisceau lumineux éclairant le champ opératoire. caractérisé en ce que la fibre optique (7,8) est solidaire d'un module (10) se fixant sur ladite pièce à main ou ledit contre-angle, de manière à la rendre interchangeable et démontable en une seule opération.

## Description

La présente invention a pour objet un nouveau contre-angle ou pièce à main de dentisterie équipé d'une fibre optique permettant de fournir sur la tête dudit contre-angle ou de ladite pièce à main un faisceau lumineux éclairant le champ opératoire.

Il existe déjà de multiples réalisations permettant de parvenir à ce résultat.

Ainsi il a été proposé de disposer deux ampoules directement dans la tête de la pièce à main. Ce système n'est pas satisfaisant dans la mesure où il faut prévoir une alimentation électrique traversant la pièce et du fait de la faible durée de vie des ampoules difficiles à changer pour le praticien.

D'autres dispositifs ont donc été proposés à base d'une fibre optique traversant la pièce à main, coopérant avec une source lumineuse disposée à l'arrière de celle-ci, soit fixée sur la pièce à main, soit fixée sur le nez du moteur d'entrainement.

Ainsi l'ampoule peut être aisément accessible pour être changée par l'utilisateur.

Il existe de multiples dispositifs comportant des pistes d'alimentation électrique au niveau de la liaison entre la pièce à main et le nez du moteur.

Dans les dispositifs connus, les problèmes couramment rencontrés sont les suivants :
- la qualité de la lumière transmise par la fibre optique diminue dans le temps ;
- la fibre optique subit des contraintes à la stérilisation, ce qui conduit souvent à sa rupture ;
- la fibre optique subit enfin des contraintes importantes de flexion.

L'objet de la présente invention est de remédier à ces inconvénients des dispositifs à fibre optique de l'art antérieur.

Conformément à l'invention, on propose à cette fin un nouveau contre-angle ou pièce à main de dentisterie équipé d'une fibre optique permettant de fournir sur la tête dudit contre-angle ou de ladite pièce à main un faisceau lumineux éclairant le champ opératoire, caractérisé en ce que la fibre optique est solidaire d'un module se fixant sur ladite pièce à main ou ledit contre-angle, de manière à la rendre interchangeable et démontable en une seule opération.

On peut ainsi garantir une constance de lumière et changer en cas de besoin la fibre optique facilement, ce qui n'était pas le cas auparavant.

Il n'existe plus de contraintes de flexion ni de risque excessif de contraintes entraînant des ruptures en stérilisation.

Ce dispositif peut être adapté sur tous les types de pièces à main ou de contre-angles :
- avec lumière dans le contre-angle ou non ;
- avec une tête interchangeable ou non ;
- avec une tête à axe oblique ou non.

On comprendra mieux l'invention à l'aide de la description faite ci-après d'un mode non limitatif de mise en oeuvre en référence aux dessins annexés dans lesquels :

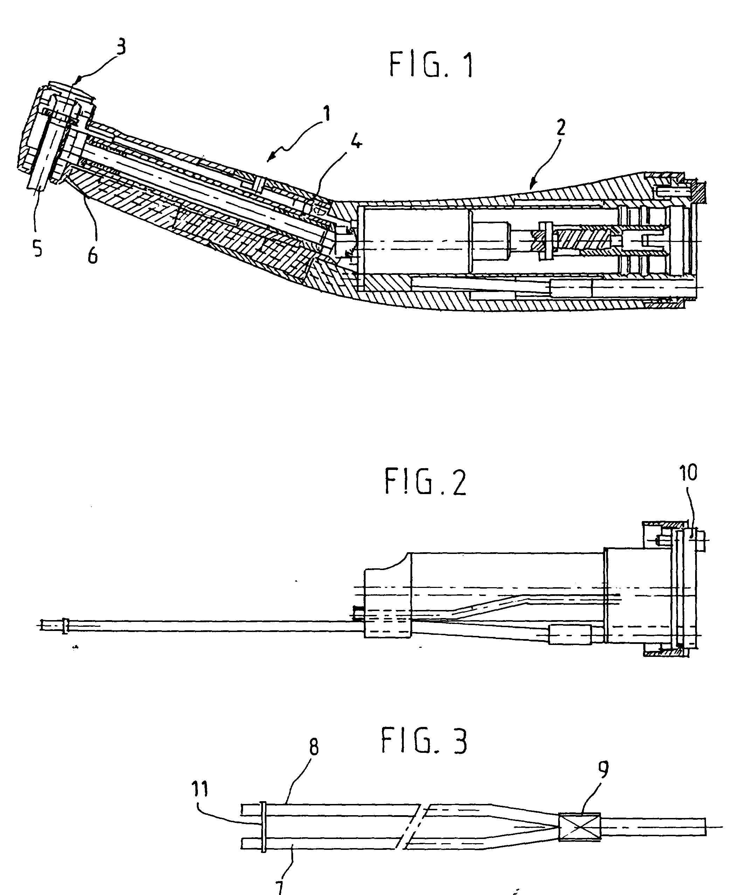

- la **figure 1** est une vue en coupe longitudinale d'un contre-angle équipé d'une fibre optique conforme à l'invention,
- la **figure 2** est une vue de la platine supportant la fibre optique, en élévation latérale,
- la **figure 3** est une vue de dessus de la fibre optique.

Le contre-angle généralement référencé (1) comporte de manière habituelle :
- une poignée de préhension (2),
- une tête (3) éventuellement démontable,
- un mécanisme d'entrainement (4) interne pour l'outil (5) tenu par la tête.

Tous ces éléments sont connus de l'homme de l'art et ne seront donc pas décrits en détail.

Pour éclairer le champ opératoire, il est usuel d'amener de la lumière au niveau de la tête, le plus près possible de l'axe de l'outil (5) par des prismes ou fibres (6).

Selon l'invention on prévoit d'utiliser une ou deux fibres optiques (7,8) flexibles qui sont guidées dans des alésages correspondants de la pièce à main.

Dans cette dernière hypothèse, les deux bras de la fibre optique auront une longueur identique, l'extrémité étant rendu rigide par un pontet (11).

Lesdites fibres optiques sont reliées entre elles à leur extrémité (9) et supportées par un module (10) bloqué sur l'arrière de la pièce à main.

Elles peuvent ainsi être positionnées aisément par le praticien, sans risque de rupture, et démontées tout aussi aisément.

## Revendications

1. Nouveau contre-angle ou pièce à main de dentisterie équipé d'une fibre optique permettant de fournir sur la tête dudit contre-angle ou de ladite pièce à main un faisceau lumineux éclairant le champ opératoire. caractérisé en ce que la fibre optique (7,8) est solidaire d'un module (10) se fixant sur ladite pièce à main ou ledit contre-angle, de manière à la rendre interchangeable et démontable en une seule opération.

2. Nouveau contre-angle ou pièce à main de dentisterie équipé d'une fibre optique selon la revendication 1 caractérisé en ce que la fibre optique comporte deux bras (7,8).

3. Nouveau contre-angle ou pièce à main de dentisterie équipé d'une fibre optique selon la revendication 2, caractérisé en ce que les deux bras (7,8) sont de même longueur.

4. Nouveau contre-angle ou pièce à main de dentisterie équipé d'une fibre optique selon l'une des revendications 2 et 3, caractérisé en ce que les deux bras sont reliés à leur extrémité par un pontet (11).
